# FASCICULE DE BREVET EUROPEEN

(11) **EP 1 926 577 B1**
(45) Date de publication et mention de la délivrance du brevet: **02.01.2013**
(21) Numéro de dépôt: 06808058.9
(22) Date de dépôt: 30.08.2006
(51) Int. Cl.: B27K 3/34, B27K 3/50, B05D 7/08, C09D 133/00, C09D 15/00

(54) **UTILISATION D'UNE COMPOSITION DE LATEX PORTANT AU MOINS UNE FONCTION UREIDO POUR ADHESION SUR BOIS**
VERWENDUNG EINER LATEXZUSAMMENSETZUNG MIT MINDESTENS EINER UREIDO-FUNKTION FÜR HOLZANHAFTUNG
USE OF A LATEX COMPOSITION HAVING AT LEAST ONE UREIDO FUNCTION FOR ADHERING TO WOOD

(30) Priorité: 30.08.2005 FR 0508868
(43) Date de publication de la demande: 04.06.2008
(73) Titulaire: Lapeyre, 92400 Courbevoie (FR)
(72) Inventeur: CASTAING, Jean-Christophe, Burlington, NJ 08016 (US); BETT, William, F-75012 Paris (FR); BOUSSEAU, Jean-Noël, F-01360 Loyettes (FR)
(74) Mandataire: Colombier, Christian
(86) Numéro de dépôt international: PCT/FR2006/002008
(87) Numéro de publication internationale: WO 2007/026074

(56) Documents cités:
- FR-A- 1 450 556
- GB-A- 769 255
- US-A- 3 300 429
- US-A- 5 744 540
- US-A- 6 031 038
- US-B1- 6 485 601

## Description

La présente invention se rapporte à l'industrie des matériaux lignocellulosiques notamment au domaine du traitement superficiel du bois. Elle décrit en particulier une composition aqueuse comprenant un latex acrylique portant au moins une fonction uréido ainsi que l'utilisation d'une telle composition dans le traitement du bois, plus particulièrement le bois préalablement traité avec un corps gras.

Le bois naturel est utilisé comme matériau dans la construction pour fabriquer des pièces destinées dans certains cas à être exposées aux conditions extérieures : il sert par exemple à la fabrication de portes, de volets ou d'huisseries.

Ces pièces ne sont jamais laissées sans traitement préalable. Elles sont en général recouvertes d'un revêtement de surface comportant éventuellement plusieurs couches (un primaire, une teinte, une couche de finition) dont la fonction est d'embellir et de protéger le bois contre le vieillissement dû à l'exposition à la pluie et au rayonnement UV.

Le bois peut également subir au préalable un traitement dans la masse, généralement avec un corps gras, afin d'en augmenter la durabilité en limitant la quantité d'eau reprise par le bois au contact de l'humidité.

L'eau a en effet un effet néfaste car elle favorise le développement des espèces xylophages et elle conduit à une modification dimensionnelle du bois (le bois « gonfle »), ce qui induit la formation de craquelures.

Dans la suite, nous ferons référence à des bois ayant subi un traitement dans la masse avec ce corps gras sous le terme de bois « hydrofugé » tels que les bois thermo-huilés développés par la société Oléobois, les bois traités selon la demande de brevet FR 2 801 241 décrivant un procédé développé par le CIRAD, ainsi que les bois décrits selon WO 05/007369, WO 03/049913, WO 04/033171. Une attention particulière est portée aux bois développés par la société Lapeyre comme décrit par le brevet WO 03/084723.

La Demanderesse s'intéresse principalement à la couche de primaire déposée directement au contact du bois en faisant référence exclusivement à des liants déposés en phase aqueuse (car ils présentent des avantages en terme de moindre toxicité et d'impact plus faible sur l'environnement par comparaison aux liants déposés à partir de solvants).

Cette couche a besoin d'avoir une adhésion durable sur le bois afin que les différentes fonctions protectrices et décoratrices du revêtement soient maintenues dans le temps.

L'adhésion de cette couche est difficile à garantir, si le bois a subi au préalable un traitement pour le rendre hydrophobe.

De manière générale, il est difficile de déposer sur du bois « hydrophobe » naturel ou aggloméré un liant en phase aqueuse sans s'exposer à des phénomènes de démouillage.

En effet, l'eau a tendance à « perler » sur le bois traité et le film de revêtement se rétracte partiellement avant d'avoir eu le temps de sécher, ce qui nuit à ses qualités esthétiques et protectrices. De plus, une fois que le film est sec, il faut garantir une adhésion sur un support dit de basse énergie (ce qui signifie qu'à l'échelle moléculaire, il est difficile d'établir entre le bois traité et le revêtement des liaisons autres que des liaisons de Van Der Waals qui sont peu adhésives).

De plus, le traitement « hydrophobe » peut présenter des phénomènes d'exsudation, qui présentent l'inconvénient de former une couche liquide non adhésive entre le revêtement et le bois.

De même, sur du bois non traité dans la masse par un traitement « hydrophobe », il est difficile de garantir une bonne adhésion dans des conditions humides pour deux raisons. D'une part, le bois étant hydrophile, des molécules d'eau peuvent parvenir plus facilement à l'interface entre le revêtement et le bois et casser certaines des liaisons assurant l'adhésion. Ce phénomène est particulièrement vrai pour des liants déposés à partir d'une phase aqueuse (qui sont stabilisés par des molécules hydrophiles, qui restent sensibles à l'eau y compris dans le revêtement sec). D'autre part, la variation dimensionnelle du bois en présence d'eau induit des contraintes latérales au sein du revêtement qui peuvent provoquer des phénomènes de décohésion.

La Demanderesse a trouvé que les problèmes évoqués précédemment et bien d'autres peuvent être résolus par l'utilisation d'un latex portant au moins une fonction uréido.

En effet, la demanderesse a trouvé qu'un latex acrylique contenant au moins une fonction uréido présente une adhésion renforcée sur les matériaux ligno-cellulosiques, notamment le bois hydrofugé, y compris dans des conditions humides.

Par « bois hydrofugé », on entend ici un bois brut naturel ou aggloméré ayant subi au moins un traitement destiné à rendre la surface extérieure du bois hydrophobe, notamment par application d'un corps gras synthétique, d'origine végétale ou animale.

La solution trouvée par la demanderesse est basée sur l'utilisation, dans le traitement superficiel du bois hydrofugé, d'une dispersion aqueuse comprenant au moins un latex obtenu par la polymérisation en émulsion d'un mélange de monomères, comprenant au moins un monomère comportant au moins une fonction uréido.

Plus précisément, le premier objet de la présente invention est l'utilisation dans le traitement superficiel du bois hydrofugé d'une dispersion aqueuse comprenant au moins un latex obtenu par la polymérisation en émulsion d'un mélange de monomères comprenant au moins un monomère acrylique comportant au moins une fonction uréido.

Par « fonction uréido », on entend ici une fonction de formule générale (Iₐ): 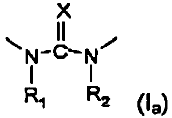 où:
- X est O ; et
- R₁ et R₂ représentent indépendamment hydrogène, un groupe alkyle linéaire ou ramifié ayant de 1 à 6 atomes de carbone, un groupe cycloalkyle ayant de 5 à 15 atomes de carbone tel que le cyclohexyle, un groupe aryle ayant de 5 à 15 atomes de carbone tel que le phényle, un groupe aralkyle ayant de 6 à 12 atomes de carbone tel que le méthylbenzyle, ces groupes pouvant être éventuellement substitués par un ou plusieurs groupes choisis parmi halogène, amine, hydroxyle, carboxyle.

La fonction uréido est dite « cyclique » lorsque R₁ et R₂ sont reliés entre eux par l'intermédiaire d'un groupe alkylène ayant de 2 à 3 atomes de carbone, portant éventuellement un ou plusieurs groupes alkyle de 1 à 4 atomes de carbone, notamment méthyle, propyle ou butyle, tels que l'éthylène, propylène, triméthylène.

Par « monomère acrylique », on entend un monomère comportant la fonction de formule (I_{b}) : 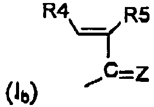 où :
- R₄ et R₅ représentent indépendamment hydrogène, un groupe alkyle linéaire ou ramifié ayant de 1 à 6 atomes de carbone, notamment méthyle, propyle ou butyle, un groupe cycloalkyle ayant de 5 à 8 atomes de carbone, un groupe aryle ou aralkyle ayant de 6 à 12 atomes de carbone, portant éventuellement un groupe alkyle de 1 à 4 atomes de carbone, notamment phényle, méthylphényle, benzyle ou méthylbenzyle,
- Z est O .

Le monomère acrylique comprend en particulier les monomères acryliques ainsi que les monomères méthacryliques. On peut citer notamment les acides (méth)acryliques, les esters (méth)acryliques et le (méth)acrylonitrile.

Parmi les monomères acryliques portant au moins une fonction uréido utiles pour la préparation du latex, on peut citer ceux répondant à la formule générale suivante (I_{c}) : 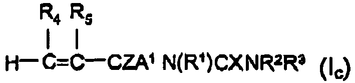 où:
- R₄ et R₅ représentent indépendamment un hydrogène, un groupe alkyle linéaire ou ramifié ayant de 1 à 6 atomes de carbone, notamment méthyle, propyle ou butyle, un cycloalkyle ayant de 5 à 8 atomes de carbone, un groupe aryle ou aralkyle ayant de 6 à 12 atomes de carbone, portant éventuellement un groupe alkyle de 1 à 4 atomes de carbone, notamment phényle, méthylphényle, benzyle ou méthylbenzyle,

- A¹ est un groupe alkylène ayant de 2 à 3 atomes de carbone tel que -CH₂-CH₂-, -CH(CH₃)CH₂- , oxyalkylène de 2 à 3 atomes de carbone tel que -O-CH₂-CH₂-, -O-CH(CH₃)CH₂- ou aminoalkylène de 2 à 3 atomes de carbone tel que -N-CH₂-CH₂-, -N-CH(CH₃)CH₂-,
- R¹ et R² représentent indépendamment hydrogène, un groupe alkyle linéaire ou ramifié ayant de 1 à 6 atomes de carbone, un groupe cycloalkyle ayant de 5 à 15 atomes de carbone tels que cyclohexyle, un groupe aryle ayant de 5 à 15 atomes de carbone tels que le phényle, un groupe aralkyle ayant de 6 à 12 atomes de carbone tels que le méthylbenzyle ou le benzyle. Ils peuvent être liés entre eux par exemple par l'intermédiaire d'un groupe alkylène linéaire ayant de 2 à 4 atomes de carbone, tels que l'éthylène, propylène, triméthylène, portant éventuellement un ou plusieurs groupes alkyle de 1 à 4 atomes de carbone, notamment méthyle, propyle ou butyle,
- R³ est hydrogène ou un groupe alkyle de 1 à 8 atomes de carbone éventuellement interrompu ou substitué par un hétéroatome, notamment un oxygène, et
- Z et X sont égaux à O.

Dans un mode de réalisation préféré, les monomères (méth)acryliques portant au moins une fonction uréido sont ceux répondant à la formule générale suivante (I_{d}) :

H₂C=CRZA¹N(R¹)CXNR²R³ (I_{d})

dans laquelle :
- R est un groupe méthyle,
- A₁, R₁, R₂, R₃, Z et X ont la même signification que donnée précédemment.

Parmi les monomères portant au moins une fonction uréido, on peut citer tout particulièrement ceux comprenant le cycle suivant (Iₑ) : 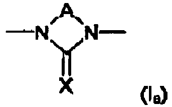 dans lequel :
- A représente un groupe alkylène de 2 à 4 atomes de carbone, tel que l'éthylène, propylène, triméthylène, portant éventuellement un groupe alkyle de 1 à 4 atomes de carbone, notamment méthyle, propyle ou butyle,
- X est O.

L'un des atomes d'azote du cycle (Iₑ) est lié au groupe portant la liaison éthylénique polymérisable alors que l'autre atome d'azote est lié à un hydrogène ou à un groupe tel qu'un groupe méthylol, alkoxyméthyle ou à un groupe alkyle ayant de 1 à 8 atomes de carbone.

Selon l'invention, le cycle préféré est :

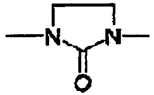

Le monomère acrylique portant au moins une fonction uréido cyclique conforme à la présente invention répond à la formule suivante (I_{f}) : 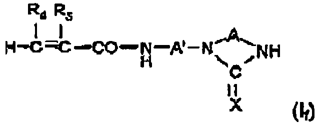 dans laquelle :
- R₄ et R₆ ont la même signification que donnée précédemment
- A et A' représentent un groupe akylène de 2 à 4 atomes de carbone, tel que l'éthylène, propylène, triméthylène, portant éventuellement un groupe alkyle de 1 à 4 atomes de carbone, notamment méthyle, propyle ou butyle,
- X est O.

Parmi les monomères répondant à la formule précédente, on peut citer le béta-uréido éthyl vinyl éther, le N-(béta-uréido éthyl)acrylamide dénommé également l'éthylène urée éthyle méthacrylamide et désigné par la suite par monomère B 1 de formule (I_{g}) :

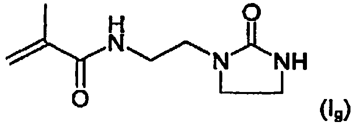

Afin d'obtenir le latex utilisé selon l'invention, on met en oeuvre un mélange de monomères pouvant comporter :
a- de 60 à 99% en poids du poids total des monomères d'au moins un monomère A choisi parmi le styrène ou ses dérivés ; le butadiène; le chloroprène; les esters (méth)acryliques tels que le méthacrylate de méthyle, l'acrylate d'éthyle, l'acrylate de butyle, l'acrylate de 2-éthyl hexyle ; les acides (méth)acryliques tels que l'acide acrylique, l'acide méthacrylique; l'anhydride maléique ; les esters vinyliques tels que l'acétate de vinyle, le versatate de vinyle ; les nitriles vinyliques et les monomères sulfonatés tels que le 1-allyloxy-2-hydroxypropylsulfonate de sodium ou de potassium (COPS), l'allylsulfonate de sodium ou de potassium (MTAS), ou l'acrylamidométhylpropanesulfonate de sodium ou de potassium (AMPS), et
b- de 0,1 à 40% en poids du poids total des monomères d'au moins un monomère B acrylique de Formule (I_{f}), notamment l'éthylène urée éthyle méthacrylamide.

Le monomère éthyléniquement insaturé A selon l'invention est tout monomère polymérisable par voie radicalaire en émulsion par les techniques bien connues de l'homme du métier. Parmi ces monomères, on peut citer tout particulièrement ceux correspondant à la formule suivante (IIₐ) :

CXdX'd (= CVd- CV'd)ₜ = CH₂ (IIₐ)

où:
- Xd, X'd, identiques ou différents, représentent H, un groupe alkyle ou un halogène,
- Vd, V'd, identiques ou différents, représentent H, un halogène ou un groupe R, OR, OCOR, NHCOH, OH, NH₂, NHR, N(R)₂, (R)₂N⁺O⁻, NHCOR, CO₂H, CO₂R, CN, CONH₂, CONHR ou CONR₂, dans lesquels R, identiques ou non, sont choisis parmi les groupes alkyle, aryle, aralkyle, alkaryle, alcène ou organosilyle, éventuellement perfluorés et éventuellement substitués par un ou plusieurs groupes carbonyle, carboxyle, époxy, hydroxyle, alkoxy, amino, halogène ou sulfoniques, ou sous la forme de leurs sels,
- t vaut 0 ou 1.

Selon un mode de réalisation particulier de l'invention, les monomères mis en oeuvre sont de préférence des monomères hydrophobes.

A titre d'illustration de monomères hydrophobes, on peut citer notamment le styrène ou ses dérivés, le butadiène, le chloroprène, les esters (méth)acryliques, les esters vinyliques et les nitriles vinyliques.

Par esters (méth)acryliques, on désigne les esters de l'acide acrylique et de l'acide méthacrylique avec les alcools en C₁-C₁₂ hydrogénés ou fluorés, de préférence C₁-C₈.

Les nitriles vinyliques incluent plus particulièrement ceux ayant de 3 à 12 atomes de carbone, comme en particulier l'acrylonitrile et le méthacrylonitrile. Il est à noter que le styrène peut être remplacé en totalité ou en partie par des dérivés tels que l'alphaméthylstyrène ou le vinyltoluène.

Les autres monomères éthyléniquement insaturés, utilisables seuls ou en mélanges, ou copolymérisables avec les monomères ci-dessus sont notamment :
- les esters vinyliques d'acide carboxylique tels que l'acétate de vinyle et le versatate de vinyle,
- les halogénures de vinyle,
- les amides de la vinylamine,
- les monomères éthyléniques insaturés comportant un groupe amino secondaire, tertiaire ou quaternaire, ou un groupe hétérocyclique contenant de l'azote. Il est de même possible d'utiliser des monomères zwitterioniques comme par exemple l'acrylate de sulfopropyl (diméthyl)aminopropyle.

Notons qu'il est possible de mettre en oeuvre des monomères hydrophiles, comme par exemple :
- les acides mono- et di- carboxyliques insaturés éthyléniques,
- les mono-alkylesters des acides dicarboxyliques du type cité avec les alcanols ayant de préférence 1 à 4 atomes de carbone et leurs dérivés N-substitués,
- les amides des acides carboxyliques insaturés,
- les monomères éthyléniques comportant un groupe acide sulfonique et ses sels alcalins ou d'ammonium,
- les amides des acides carboxyliques insaturés, comme l'acrylamide, le méthacrylamide, le N-méthylolacrylamide ou le N-méthylolméthacrylamide, les N-acrylamides.

Selon un mode de réalisation préféré, on peut citer les monomères éthyléniquement insaturés correspondant à la formule suivante (II_{b}) : 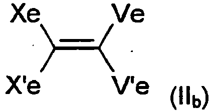 où:
- Xe et X'e, identiques ou différents, représentent hydrogène, un groupe alkyle ayant de 1 à 4 atomes de carbone ou un halogène, notamment F, Cl ou Br,
- Ve et V'e, identiques ou différents, représentent hydrogène, un halogène, notamment F, Br ou Cl, ou un groupe R, CH₂OR, OR, OCOR, NHCOH, OH, NH₂, NHR, N(R)₂, (R)₂N⁺O⁻, NHCOR, CO₂H, CO₂R, CN, CONH₂, CONHR ou CONR₂, dans lesquels R, identiques, ou non, sont choisis parmi les groupes alkyle ayant de 1 à 12 atomes de carbone, les groupes aryle, notamment un groupe phényle, aralkyle, alkaryle, alcène ou organosilyle, éventuellement perfluorés et éventuellement substitués par un ou plusieurs groupes carbonyle, carboxyle, époxy, hydroxyle, alkoxy, amino, halogène ou sulfoniques, ou sous la forme de leurs sels.

Dans un autre mode de réalisation, Xe et Ve peuvent être liés par un groupe alkylène ayant de 2 à 3 atomes de carbone, tels que l'éthylène, propylène, triméthylène, pouvant être substitués par un groupe carbonyle.

De préférence, on peut choisir le monomère éthyléniquement insaturé parmi le styrène ou ses dérivés ; le butadiène ; le chloroprène ; les esters (méth)acryliques tels que le méthacrytate de méthyle, l'acrylate d'éthyle, l'acrylate de butyle, l'acrylate de 2-éthyle hexyle ; les acides (méth)acryliques tels que l'acide acrylique, l'acide méthacrylique ; l'anhydride maléique ; les esters vinyliques tels que l'acétate de vinyle, le versatate de vinyle ; les nitriles vinyliques et les monomères sulfonatés tels que le 1-allyloxy-2-hydroxypropylsulfonate de sodium ou de potassium (COPS), l'allylsulfonate de sodium ou de potassium (MTAS) ou l'acrylamidométhylpropanesulfonate de sodium ou de potassium (AMPS).

Le monomère B acrylique conforme à l'invention est utilisé avantageusement à une teneur comprise entre 0,5% et 20%, en particulier entre 1 % et 10 % en poids du poids total des monomères à polymériser.

Le latex de l'invention peut être obtenu par les techniques de polymérisation en émulsion adaptées et qui sont bien connues de l'homme du métier comme décrites ci-après.

La réaction de polymérisation selon l'invention a lieu en présence d'un amorceur de polymérisation radicalaire.

Celui-ci peut être choisi parmi les initiateurs classiquement utilisés en polymérisation radiculaire. Il peut s'agir par exemple d'un des initiateurs suivants :
- les peroxydes d'hydrogène tels que : l'hydroperoxyde de butyle tertiaire, l'hydroperoxyde de cumène, le t-butyl-peroxyacétate, le t-butylperoxy-benzoate, le t-butylperoxyoctoate, le t-butylperoxy-néodécanoate, le t-butylperoxyisobutyrate, le peroxyde de lauroyle, le t-amylperoxypivalate, le t-butylperoxypivalate, le peroxyde de dicumyle, le peroxyde de benzoyle, le persulfate de potassium, le persulfate d'ammonium,
- les composés azoïques tels que : le 2-2'-azobis(isobutyronitrile), le 2,2'-azobis(2-butanenitrile), le 4,4'-azobis(4-acide pentanoïque), le 1,1'-azobis(cyclohexane-carbonitrile), le 2-(t-butylazo)-2-cyanopropane, le 2,2'-azobis[2-méthyl-N-(1,1)-bis(hydroxyméthyl)-2-hydroxyéthyl] propionamide, le 2,2'-azobis[2-méthyl-N-hydroxyéthyl]-propionamide, le dichlorure de 2,2'-azobis(N,N'-diméthylèneisobutyramidine), le dichlorure de 2,2'-azobis (2-amidinopropane), le 2,2'-azobis (N,N'-diméthylèneisobutyramide), le 2,2'-azobis(2-méthyl-N-[1,1-bis (hydroxyméthyl)-2-hydroxyéthyl] propio-namide), le 2,2'-azobis(2-méthyl-N-[1,1-bis (hydroxyméthyl)éthyl] propionamide), le 2,2'-azobis[2-méthyl-N-(2-hydroxyéthyl) propionamide], le 2,2'-azobis(isobuty-ramide) dihydrate,
- les systèmes redox comportant des combinaisons telles que :
   - les mélanges de peroxyde d'hydrogène, d'alkyle, peresters, percarbonates et similaires et de n'importe lequel des sels de fer, de sels titaneux, formaldéhyde sulfoxylate de zinc ou formaldéhyde sulfoxylate de sodium, et des sucres réducteurs,
   - les persulfates, perborate ou perchlorate de métaux alcalins ou d'ammonium en association avec un bisulfite de métal alcalin tel que le métabisulfite de sodium, et des sucres réducteurs,
   - les persulfates de métal alcalin en association avec un acide arylphosphonique tel que l'acide benzène phosphonique et autres similaires, et des sucres réducteurs.

La réaction de polymérisation a lieu de manière classique.

Elle est faite en présence d'un tensioactif non ionique ou anionique choisi parmi les mono-, di- ou trialkylphénols alcoxylés, les mono-, di- ou tristyrylphénols alcoxylés, les alcools gras alcoxylés et les sels alcalins ou d'ammonium de sulfates d'alkyle en C₈-C₁₂, les semi-esters d'alcools gras alcoxylés sulfatés, les esters sulfonates d'alkyle en C₁₂-C₁₈, etc.

La température de polymérisation est elle aussi classique. A titre d'illustration, la température est comprise entre 50° et 120°C, plus particulièrement entre 70° et 100°C.

De manière générale, le polymère, ou liant, constituant essentiel du latex, représente de 30 à 60% en poids du poids total du latex.

Le latex de l'invention présente une température minimum de filmification comprise entre 0° et 80°C et, de préférence, entre 0° et 40°C et une température de transition vitreuse comprise entre -20° et 90°C et, de préférence, entre 10 et 50°C.

Le traitement superficiel peut être réalisé sur du bois hydrofugé brut naturel ou aggloméré. Le bois hydrofugé est obtenu à partir d'un bois brut par un traitement dans la masse par un corps gras, notamment un corps gras synthétique ou d'origine végétale ou animale.

Le bois hydrofugé peut être obtenu à partir d'un bois naturel brut, par exemple selon le procédé décrit par WO 96/038275 qui consiste à imprégner le bois aux moyens d'huile végétale et /ou de tout corps gras d'origine animale ou minérale. On peut citer, à cet effet, notamment les acides et les alcools gras saturés, mono- ou polyinsaturés ainsi que leurs dérivés, comme les esters ou les anhydrides, par exemple l'anhydride maléique. Le traitement peut être celui décrit par exemple dans WO 03/084723 dans lequel le traitement est effectué par greffage avec un anhydride mixte sauf l'anhydride mixte d'acide acétique/benzoïque, de préférence entre 100°C. et 140°C. L'anhydride mixte peut être préparé à partir, par exemple, de chlorure d'acide et d'ester carboxylique, de chlorure d'acide et de sel d'acide carboxylique ou d'un anhydride d'acide carboxylique linéaire et d'un acide gras. On peut aussi mentionner le procédé décrit par WO 03/049913 cité précédemment.

Le bois brut pouvant être traité selon l'invention est généralement choisi parmi le hêtre, le pin, le sipo, le chêne, le para-para, le méranti, le curupixa, l'eucalyptus ou le tauari.

L'homme du métier sait définir et rajouter dans la composition de l'invention tous les ingrédients et additifs nécessaires à sa réalisation, et ceci selon l'application et le bois choisis.

Ainsi, la composition de l'invention peut comprendre par exemple un plastifiant, un silane et un anti-UV, et ceci en respectant les proportions massiques suivantes :
a. Latex de 89 à 100%
b. Plastifiant de 0 à 5%
c. Silane de 0 à 1%
d. Anti UV de 0 à 5%.

Généralement, le « plastifiant » est un composé liquide peu ou partiellement soluble dans l'eau destiné à abaisser la température de transition vitreuse du latex. On peut citer notamment le Texanol® (Triméthyl hydroxypentyl Isobutyrate) commercialisé par Eastman.

Généralement, le composé « anti-UV » est un composé minéral ou organique caracterisé par une bonne transparence vis-a-vis du rayonnement visible et une forte absorption du rayonnement UV. On peut citer comme exemple des nanoparticules d'oxyde de cérium de 10 nm environ de diamètre.

Le silane permet notamment de renforcer l'adhésion sur le bois hydrofugé aux temps courts.

De préférence, le silane est un composé présentant la formule générale suivante :

R_{c} -[Si(R_{d})(ORₑ)(OR_{f})]ₘ

- R_{c} représente un groupe alkyle ou alcène linéaire, ramifié ou cyclique comportant de 1 à 30 atomes de carbone éventuellement substitué et/ou interrompu par un ou plusieurs hétéroatome(s), notamment un oxygène, un soufre ou un azote, ou un groupe aryle ou aralkyle comportant de 5 à 30 atomes de carbone, éventuellement substitué et/ou interrompu par un ou plusieurs hétéroatome(s), notamment un oxygène, un soufre ou un azote, ou substitué par un groupe carbonyle, un groupe carboxyle, un groupe amino, alkylamino, amide, nitrile, époxy, ou un groupe comportant une fonction vinylique ou acrylique, notamment méthacrylique, ou un groupe uréido,
- R_{d} représente un hydrogène, ORₑ, OR_{f} ou un groupe alkyle linéaire ou ramifié de 1 à 5 atomes de carbone, éventuellement substitué et/ou interrompu par un ou plusieurs hétéroatomes, notamment un oxygène ou un azote,
- Rₑ et R_{f} représentent indépendamment un hydrogène ou un groupe alkyle linéaire ou ramifié de 1 à 5 atomes de carbone,
m est compris entre 1 et 3.

En particulier, le silane utilisé peut être le γ-glycidoxypropyle triméthoxysilane.

Plus généralement, le silane selon l'invention peut être choisi parmi :
- Octyltriéthoxysilane,
- Méthyl triéthoxysilane,
- Methyl triméthoxysilane,
- tris-[3-(triméthoxysilyl)propyl] isocyanurate,
- γ-Mercaptopropyl triméthoxysilane,
- bis-(3-[Triéthoxysilyl]propyl) polysulfide,
- bis-(3-[Triéthoxysilyl] propyl) disulfide,
- γ-Aminopropyl triéthoxysilane,
- γ-Aminopropyl triméthoxysilane,
- N-(β-Aminoéthyl)- γ-Aminopropyl triméthoxysilane,
- bis-[γ-(Triméthoxysilyl) propyl] amine,
- N-(β-Aminoéthyl)- γ-Aminopropyl méthyldiméthoxysilane,
- N-Phényl-γ-Aminopropyl triméthoxysilane,
- N-éthyl-γ-aminoïsobutyl triméthoxysilane,
- 4-Amino-3,3-diméthylbutyl triméthoxysilane,
- 4-Amino-3,3-diméthylbutylmethyl diméthoxysilane,
- γ-Uréidopropyl trialkoxysilane,
- γ-Uréidopropyl triméthoxysilane,
- γ-Isocyanatopropyl triéthoxysilane,
- γ-Isocyanatopropyl triméthoxysilane,
- β-(3,4-Epoxycyclohexyl) éthyl triméthoxysilane,
- γ-Glycidoxypropyl triméthoxysilane,
- β-(3,4-époxycyclohexyl)-éthyl triéthoxysilane,
- γ-Glycidoxypropyl méthyldiéthoxysilane,
- Vinyl triéthoxysilane,
- Vinyl triméthoxysilane,
- Vinyl tris-(2-méthoxyéthoxy)silane,
- Vinyl méthyldiméthoxysilane,
- Vinyl triisopropoxysilane,
- γ-Méthacryloxypropyl triméthoxysilane,
- y-Méthacryloxypropyl triisopropoxysilane, et
- γ-Méthacryloxypropyl triéthoxysilane.

Les exemples suivants illustrent l'invention sans en limiter la portée. Ils montrent que, par rapport à des échantillons témoins synthétisés dans les mêmes conditions mais sans le monomère B1, l'adhésion après des cycles d'humidité et de séchage est renforcée avec les latex de l'invention.

### Exemples :

### Exemple 1 : synthèse des latex selon l'invention

Latex A (selon l'invention) : Dans un réacteur en inox de volume 25 I, on charge 3 000 g d'eau, 53,5 g de tensioactif anionique, 100 g d'un monomère copolymérisable sulfonaté. Parallèlement, une émulsion est préparée en mélangeant 3 840 g d'eau, 100 g du même tensioactif anionique, 100 g d'acide acrylique, 160 g de monomère B1, 4 550 g de méthacrylate de méthyle, 3 450 g d'acrylate de 2-éthylhexyle. 7,5% de cette émulsion est placée dans le réacteur. Le réacteur est ensuite porté à 80°C. On alimente sur 6,5 h le reste de l'émulsion et une solution aqueuse de persulfate (5 g de persulfate d'ammonium pour 500 g d'eau). Après ces introductions, la température est gardée à 80°C pendant 1 h puis le latex est refroidi. Son pH est amené à 8 par addition d'ammoniaque.

Latex A (référence): le même procédé et les mêmes compositions de monomères sont employées, hormis de monomère B1 qui a été supprimé.

Latex B (selon l'invention) : dans un réacteur en inox de volume 25 1, on charge 3 000 g d'eau, 53,5 g de tensioactif anionique, 100 g d'un monomère copolymérisable sulfonaté. Parallèlement, une émulsion est préparée en mélangeant 3 840 g d'eau, 100 g du même tensioactif anionique, 100 g d'acide acrylique, 160 g de monomère B1, 4 000 g de méthacrylate de méthyle, 4 000 g d'acrylate de 2-éthylhéxyle. 7,5% de cette émulsion est placée dans le réacteur. Le réacteur est ensuite porté à 80°C. On alimente sur 6,5 h le reste de l'émulsion et une solution aqueuse de persulfate (5 g de persulfate d'ammonium pour 500 g d'eau). Après ces introductions, la température est gardée à 80°C pendant 1 h puis le latex est refroidi. Son pH est amené à 8 par addition d'ammoniaque.

Latex B (référence) : le même procédé et les mêmes compositions de monomères sont employés, hormis de monomère B1 qui a été supprimé.

### Exemple 2

Les expériences réalisées ont pour objectif de quantifier l'adhésion sur le bois, y compris en condition humide, de couches de vernis contenant les latex selon l'invention par comparaison avec des latex ne contenant pas de groupement uréido.

Les bois envisagés sont les suivants :
- chêne
- sipo
- pin
- hêtre
- bois naturel traité avec un corps gras désigné par bois hydrofugé.

Comme mentionné plus haut, le traitement peut être celui décrit par exemple dans WO 03/084723 dans lequel le traitement est effectué par greffage avec un anhydride mixte comportant des chaînes hydrocarbonées autre que l'anhydride mixte d'acide acétique/benzoïque.

L'adhésion est évaluée à l'aide du test de quadrillage : le film est fendu selon un quadrillage à l'aide d'un cutter. Un ruban de scotch, appliqué puis retiré, permet d'enlever les parties du revêtement non adhésives. Le résultat est évalué selon la norme ISO 2409 de Novembre 1994.

Les tests d'adhésion se font après avoir conditionné pendant une durée variable les plaques de bois dans une enceinte de type brouillard salin. Le brouillard salin est initialement une enceinte de vieillissement accéléré pour évaluer la corrosion de matériaux métalliques. Les conditions opératoires de cette enceinte sont les suivantes : la température de test est de 50°C, à l'intérieur de l'enceinte les échantillons sont soumis à un brouillard d'eau salée (la concentration en NaCl est ajustée à 5.3 g/l), les échantillons sont déposés à plat, la face comportant le revêtement à tester vers le haut.

De plus, les pièces de bois testées ne sont appliquées que sur une face, ce qui accentue le phénomène de gonflement par l'eau ; l'eau rentrant par les cinq autres faces non peintes.

Le terme « film » signifie que la suspension de liant (telle quelle) a été appliquée à 300 µm (épaisseur humide) puis séchée.

Le terme vernis signifie que le liant a été inclus dans la formulation suivante tableau 1) :

**Tableau 1**

| CONSTITUANTS | Poids (g) | Fonction | Fournisseur |
|---|---|---|---|
| Latex, A, B ou C (ES=48%) | 56,98 | Liant | |
| placer sous agitation, ajouter le pré-mélange | | | |
| TEXANOL | 2,71 | Agent de coalescence | EASTMANN |
| EAU | 1,80 | | |
| ACRYSOL RM-2020 (ES=20%) | 1,80 | épaississant PU associatif | ROHM & HAAS |
| BYK 024 (ES=95%) | 0,18 | antimousse | BYK CHEMIE |
| RHODOLINE DP 1210 (ES=40%) | 0,32 | Agent dispersant | RHODIA |
| ACEMATT OK 412 | 2,15 | Agent de matage | DEGUSSA |
| EAU | 20,50 | | |
| AMMONIAQUE 20% | 0,09 | | |
| PROPYLENEGLYCOL | 4,51 | | |
| WOODOL 100 ES | 2,28 | Fongicide | |
| RHODIGARD W200 (éventuellement) | 4,96 | Agent anti-UV minéral | RHODIA |
| SILQUEST® Silane A-187 (éventuellement) | 1,00 | Agent de couplage | UNION CHEMICALS |
| ACRYSOL RM-8 W | 0,72 | épaississant PU associatif | ROHM & HAAS |
| TOTAL | 100,00 | | |

Dans les exemples qui vont suivre, le résultat prend des valeurs entières comprises entre 0 et 5, 5 désignant une moins bonne adhésion du latex et 0 une meilleure adhésion de ce dernier.

Les caractéristiques des latex des exemples sont données dans le tableau 2 ci-dessous :

**Tableau 2**

| | |
|---|---|
| latex. A (invention) | latex acrylique de TMFF=20°C avec B1 |
| latex A (référence) | latex acrylique de TMFF=20°C sans B1 |
| latex B (invention) | latex acrylique de TMFF=0°C avec B1 |
| latex B (référence) | latex acrylique de TMFF=0°C sans B1 |
| latex C (référence) | LS5000 (nanolatex acrylique) |

### Exemple 2.1

Les films de latex ou de vernis sont appliqués sans l'ajout d'additifs supplémentaires.

Les résultats sont présentés dans le tableau 3 suivant :

**Tableau 3**

| Traitement avec un film ou un vernis | Conditions de séchage | | | | |
|---|---|---|---|---|---|
| | 18 h 55%rh 23°C | | | 7 j 100% rh 35°C | 17 j 100% rh 35°C |
| | quadrillage | aspect | ange eau | quadrillage | quadrillage |
| App^{o} film latex A (invention) (+5% Texanol) | 3 | ras | 57 | 0 | 0 |
| App° film latex B (référence) | 0 | démouilla ge | 68 | 1 | 1 |
| App^{o} film latex C-(réfémnoe) (+2% Texanol) | 0 | démouilla ge | 51 | 0 | 0 |
| App° vernis latex B (référence) | 3 | ras | 68 | 2 | 3 |
| App° vernis latex A (invention) | 0 | ras | 78 | 0 | 0 |

Ces résultats font ressortir l'intérêt du latex A selon l'invention. Le latex C donne également de bonnes performances mais présente des problèmes de démouillage à l'application.

Pour faire ressortir l'intérêt éventuel du monomère « monomère B1 », les essais comparatifs suivants ont été faits sur différents types de bois.

### Exemple 2.2

Les résultats sont présentés dans les tableaux 4 à 6 (en fonction de la durée du vieillissement effectué dans l'enceinte d'un brouillard salin).

Les latex sont comparés en fonction de la présence du monomère B1 et en combinaison avec d'autres agents susceptibles de renforcer la durabilité du film (silane ou anti-UV minéral).

Ces résultats font ressortir l'avantage procuré en terme d'adhésion à sec et en humide sur différents bois par les latex contenant des monomères B1. L'ajout de silane époxydé renforce l'adhésion en particulier sur bois hydrofugé et aux temps courts.

**Tableau 4**

| | | | | | | **Adhésion à sec à t = 0** | | | | |
|---|---|---|---|---|---|---|---|---|---|---|
| **Latex** | | | **Plastifiant** | **Silane** | **Anti UV** | **Bois hydrofugé** | **hêtre** | **pin** | **sipo** | **chêne** |
| **Latex** | **B1** | **Taux** | **Texanol** | **W78** | **RW200** | | | | | |
| latex A (référence) | non | 95 | 5 | 0 | 0 | 2 | 3 | 2 | 2 | 0 |
| latex A (référence) | non | 94 | 5 | 1 | 0 | 0 | 0 | 1 | 1 | 0 |
| latex A (référence) | non | 89 | 5 | 1 | 5 | 0 | 0 | 1 | 1 | 0 |
| latex A (invention) | oui | 95 | 5 | 0 | 0 | 2 | 0 | 0 | 0 | 0 |
| latex A (invention) | oui | 94 | 5 | 1 | 0 | 0 | 0 | 0 | 0 | 0 |
| latex A (invention) | oui | 89 | 5 | 1 | 5 | 0 | 0 | 0 | 0 | 0 |
| latex B (référence) | non | 100 | 0 | 0 | 0 | 0 | 0 | 0 | 0 | 0 |
| latex B (référence) | non | 99 | 0 | 1 | 0 | 0 | 0 | 0 | 0 | 0 |
| latex B (référence) | non | 94 | 0 | 1 | 5 | 0 | 0 | 0 | 0 | 0 |
| latex B (invention) | oui | 100 | 0 | 0 | 0 | 0 | 0 | 0 | 0 | 0 |
| latex B (invention) | oui | 99 | 0 | 1 | 0 | 0 | 0 | 0 | 0 | 0 |
| latex B (invention) | oui | 94 | 0 | 1 | 5 | 0 | 0 | 0 | 0 | 0 |

**Tableau 5**

| | | | | | | **Adhésion après 17 h au brouillard salin** | | | | |
|---|---|---|---|---|---|---|---|---|---|---|
| **Latex** | | | **Plastifiant** | **Silane** | **Anti UV** | **Bois hydrofugé** | **hêtre** | **pin** | **sipo** | **chêne** |
| Latex | B1 | Taux | Texanol | W78 | RW200 | | | | | |
| latex A (référence) | non | 95 | 5 | 0 | 0 | 2 | 5 | 5 | 0 | 0 |
| latex A (référence) | non | .94 | 5 | 1 | 0 | 0 | 5 | 5 | 0 | 0 |
| latex A (référence) | non | 89 | 5 | 1 | 5 | 0 | 5 | 5 | 0 | 0 |
| latex A (invention) | oui | 95 | 5 | 0 | 0 | 2 | 0 | 2 | 0 | 0 |
| latex A (invention) | oui | 94 | 5 | 1 | 0 | 0 | 0 | 1 | 0 | 0 |
| latex A (invention) | oui | 89 | 5 | 1 | 5 | 0 | 0 | 0 | 0 | 0 |
| latex B (référence) | non | 100 | 0 | 0 | 0 | 0 | 5 | 5 | 0 | 0 |
| latex B (référence) | non | 99 | 0 | 1 | 0 | 0 | 5 | 5 | 0 | 0 |
| latex B (référence) | non | 94 | 0 | 1 | 5 | 0 | 5 | 5 | 0 | 0 |
| latex B (invention) | oui | 100 | 0 | 0 | 0 | 0 | 0 | 5 | 0 | 0 |
| latex B (invention) | oui | 99 | 0 | 1 | 0 | 0 | 1 | 0 | 0 | 0 |
| latex B (invention) | oui | 94 | 0 | 1 | 5 | 0 | 0 | 0 | 0 | 0 |

**Tableau 6**

| | | | | | | **Adhésion après 12 j au brouillard salin** | | | | |
|---|---|---|---|---|---|---|---|---|---|---|
| **Latex** | | | **Plastifiant** | **Silane** | **Anti UV** | **Bois hydrofugé** | **hêtre** | **pin** | **sipo** | **chêne** |
| Latex | B1 | Taux | Texanol | W78 | RW200 | | | | | |
| latex A (référence) | non | 95 | 5 | 0 | 0 | 5 | 5 | 5 | 5 | 3 |
| latex A (référence) | non | 94 | 5 | 1 | 0 | 0 | 5 | 5 | 5 | 3 |
| latex A (référence) | non | 89 | 5 | 1 | 5 | 0 | 5 | 5 | 5 | 3 |
| latex A (invention) | oui | | 5 | 0 | 0 | 0 | 0 | 0 | 0 | 0 |
| latex A (invention) | oui | 94 | 5 | 1 | 0 | 0 | 0 | 0 | 0 | 0 |
| latex A (invention) | oui | 89 | 0 | 1 | 5 | 0 | 0 | 0 | 0 | 0 |
| latex B (référence) | non | 100 | 0 | 0 | 0 | 3 | 5 | 5 | 5 | 3 |
| latex B (référence) | non | 99 | 0 | 1 | 0 | 0 | 5 | 5 | 1 | 0 |
| latex B (référence) | non | 94 | 0 | 1 | 5 | 0 | 5 | 5 | 0 | 0 |
| latex B (invention) | oui | 100 | 0 | 0 | 0 | 0 | 5 | 3 | 0 | 0 |
| latex B (invention) | oui | 99 | 0 | 1 | 0 | 0 | 0 | 0 | 0 | 0 |
| latex B (invention) | oui | 94 | 0 | 1 | 5 | 0 | 0 | 0 | 0 | 0 |

La présence dans le latex du monomère portant au moins une fonction uréido présente un intérêt accru lorsque le bois hydrofugé est soumis à des conditions d'humidité prolongée.

## Revendications

1. Utilisation d'une dispersion aqueuse comprenant au moins un latex comportant au moins une fonction uréido, ledit latex étant obtenu par polymérisation en émulsion d'un mélange d'au moins un monomère A et d'au moins un monomère B acrylique de formule : 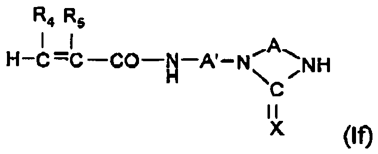 dans laquelle :
- R₄ et R₅ représentent indépendamment un hydrogène, un groupe alkyle linéaire ou ramifié ayant de 1 à 6 atomes de carbone, notamment méthyle, propyle ou butyle, un groupe cycloalkyle ayant de 5 à 8 atomes de carbone, un groupe aryle ou aralkyle ayant de 6 à 12 atomes de carbone, portant éventuellement un groupe alkyle de 1 à 4 atomes de carbone, notamment phényle, méthylphényle, benzyle ou méthylbenzyle,
- A et A' représentent indépendamment un groupe alkylène de 2 à 4 atomes de carbone, portant éventuellement un groupe alkyle de 1 à 4 atomes de carbone,
- X est un atome d'oxygène,
pour le traitement superficiel du bois hydrofugé ayant subi un traitement destiné à rendre la surface extérieure du bois hydrophobe par application d'un corps gras synthétique, ou d'origine végétale ou animale.

2. Utilisation selon la revendication 1, **caractérisée en ce que** le monomère B acrylique répond à la formule (If) dans laquelle R₄ et R₅ représentent respectivement un hydrogène et un groupe méthyle et A et A' représentent indépendamment un groupe éthylène, propylène ou isopropylène.

3. Utilisation selon la revendication 2, **caractérisée en ce que** le monomère B acrylique est l'éthylène urée éthyl méthacrylamide de formule Ig :

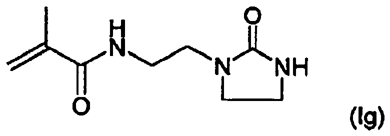

4. Utilisation selon l'une des revendications 1 à 3, **caractérisée en ce que** le monomère A choisi parmi le styrène ou ses dérivés ; le butadiène ; le chloroprène : les esters (méth)acryliques ; les acides (méth)acryliques ; l'anhydride maléique ; les esters vinyliques ; les nitriles vinyliques et les monomères sulfonatés.

5. Utilisation selon la revendication 4, **caractérisée en ce que** le monomère A est le méthacrylate de méthyle, l'acrylate d'éthyle, l'acrylate de butyle, l'acrylate de 2-éthylhexyle, l'acide acrylique, l'acide méthacrylique, l'acétate de vinyle, le versatate de vinyle, le 1-allyloxy-2-hydroxypropylsulfonate de sodium ou de potassium (COPS), l'allylsulfonate de sodium ou de potassium (MTAS), ou l'acrylamidométhyl propanesulfonate de sodium ou de potassium (AMPS).

6. Utilisation selon l'une des revendications 1 à 5, **caractérisée en ce que** le mélange de monomères comprend :
a - de 60% à 99% en poids du poids total du mélange d'au moins un monomère A choisi parmi le styrène ou ses dérivés ; le butadiène ; le chloroprène ; les esters (méth)acryliques ; les acides (méth)acryliques ;
l'anhydride maléique ; les esters vinyliques ; les nitriles vinyliques et les monomères sulfonatés, et
b - de 0,1% à 40% en poids du poids total du mélange d'au moins un monomère B acrylique de formule (If).

7. Utilisation selon la revendication 6, **caractérisée en ce que** le monomère B acrylique représente de 0,5% à 20% en poids du poids total du mélange de monomères, de préférence de 1 à 10%.

8. Utilisation selon l'une des revendications 1 à 7, **caractérisée en ce que** le latex présente une température minimum de filmfication (TMFF) comprise entre 0° à 80°C, de préférence entre 0° et 40°C, et une température de transition vitreuse comprise entre -20° et 90°C, de préférence entre 10° et 50°C.

9. Utilisation selon l'une des revendications 1 à 8, **caractérisée en ce que** le bois est un bois brut choisi parmi le hêtre, le pin, le sipo, le chêne, le para-para, le méranti, le curupixa, l'eucalyptus ou le tauari.

10. Utilisation selon l'une des revendications 1 à 9, **caractérisée en ce que** la composition comprend en outre un plastifiant, un silane et un anti-UV dans les proportions massiques suivantes :
Latex de 89 à 100%
Plastifiant de 0 à 5%
Silane de 0 à 1%
Anti-UV de 0 à 5%.

11. Utilisation selon la revendication 10, **caractérisée en ce que** le silane est le γ-glycidoxypropyl triméthoxysilane.

## Claims

1. Use of an aqueous dispersion comprising at least one latex comprising at least one ureido function, said latex being obtained by emulsion polymerization of a mixture of at least one monomer A and of at least one acrylic monomer B with the formula: 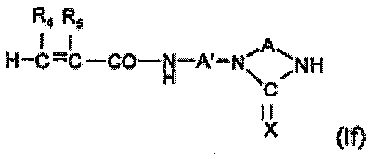 in which:
- R₄ and R₅ independently represent a hydrogen, a linear or branched alkyl group containing from 1 to 6 carbon atoms, in particular methyl, propyl or butyl, a cycloalkyl group containing from 5 to 8 carbon atoms, or an aryl or aralkyl group containing from 6 to 12 carbon atoms, optionally carrying an alkyl group containing from 1 to 4 carbon atoms, in particular phenyl, methylphenyl, benzyl or methylbenzyl,
- A and A' independently represent an alkylene group containing from 2 to 4 carbon atoms, optionally carrying an alkyl group containing from 1 to 4 carbon atoms,
- X is an oxygen atom,
for the surface treatment of waterproofed wood which has undergone a treatment intended to render the external surface of the wood hydrophobic by application
of a synthetic fatty substance or a fatty substance of vegetable or animal origin.

2. Use according to Claim 1, **characterized in that** the acrylic monomer B has formula (If) in which R₄ and R₅ respectively represent a hydrogen and a methyl group and A and A' independently represent an ethylene, propylene or isopropylene group.

3. Use according to Claim 2, **characterized in that** the acrylic monomer B is methacrylamidoethyl ethylene urea with formula Ig:

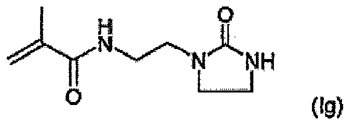

4. Use according to one of Claims 1 to 3, **characterized in that** the monomer A is selected from styrene or its derivatives; butadiene; chloroprene; (meth)acrylic esters; (meth)acrylic acids; maleic anhydride; vinyl esters; vinyl nitriles and sulphonated monomers.

5. Use according to Claim 4, **characterized in that** the monomer A is methyl methacrylate, ethyl acrylate, butyl acrylate, 2-ethylhexyl acrylate, acrylic acid, methacrylic acid, vinyl acetate, vinyl versatate, sodium or potassium 1-allyloxy-2-hydroxypropyl-sulphonate (COPS), sodium or potassium allylsulphonate (MTAS), or sodium or potassium acrylamido-methylpropane sulphonate (AMPS).

6. Use according to one of Claims 1 to 5, **characterized in that** the mixture of monomers comprises:
a - from 60% to 99% by weight of the total mixture weight of at least one monomer A selected from styrene and its derivatives; butadiene; chloroprene; (meth)acrylic esters; (meth)acrylic acids; maleic anhydride; vinyl esters; vinyl nitriles and sulphonated monomers, and
b - from 0.1% to 40% by weight of the total mixture weight of at least one acrylic monomer B with formula (If).

7. Use according to Claim 6, **characterized in that** the acrylic monomer B represents from 0.5% to 20% by weight of the total monomer mixture weight, preferably from 1% to 10%.

8. Use according to one of Claims 1 to 7, **characterized in that** the latex has a minimum film-forming temperature (MFFT) between 0°C and 80°C, preferably between 0°C and 40°C, and a glass transition temperature between -20°C and 90°C, preferably between 10°C and 50°C.

9. Use according to one of Claims 1 to 8, **characterized in that** the wood is raw wood selected from beech, pine, sipo, oak, para-para (Jacaranda), meranti, curupixa, eucalyptus and tauari.

10. Use according to one of Claims 1 to 9, **characterized in that** the composition further comprises a plasticizer, a silane and an anti-UV agent in the following proportions by weight:
latex, from 89% to 100%;
plasticizer, from 0 to 5%;
silane, from 0 to 1%;
anti-UV agent, from 0 to 5%.

11. Use according to Claim 10, **characterized in that** the silane is γ-glycidoxypropyltrimethoxysilane.

## Patentansprüche

1. Verwendung einer wässrigen Dispersion, die wenigstens einen Latex mit wenigstens einer Ureidofunktion umfasst, wobei der Latex durch Emulsionspolymerisation eines Gemischs aus wenigstens einem Monomer A und aus wenigstens einem Acrylmonomer B folgender Formel erhalten wird: 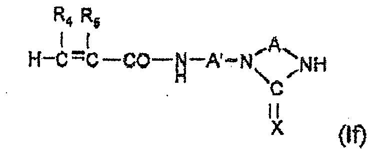 worin:
- R₄ und R₅ unabhängig einen Wasserstoff, eine lineare oder verzweigte Alkylgruppe mit 1 bis 6 Kohlenstoffatomen, insbesondere Methyl, Propyl oder Butyl, eine Cycloalkylgruppe mit 5 bis 8 Kohlenstoffatomen, eine Aryl- oder Aralkylgruppe mit 6 bis 12 Kohlenstoffatomen, die eventuell eine Alkylgruppe mit 1 bis 4 Kohlenstoffatomen trägt, insbesondere Phenyl, Methylphenyl, Benzyl oder Methylbenzyl darstellen,
- A und A' unabhängig eine Alkylengruppe mit 2 bis 4 Kohlenstoffatomen, die eventuell eine Alkylgruppe mit 1 bis 4 Kohlenstoffatomen trägt, darstellen,
- X ein Sauerstoffatom ist,
für die Oberflächenbehandlung von wasserabweisend ausgerüstetem Holz, das einer Behandlung unterzogen wurde, die dazu bestimmt ist, die Außenfläche des Holzes durch Auftragen eines synthetischen Fettes, oder Fettes pflanzlichen oder tierischen Ursprungs, wasserabweisend zu machen.

2. Verwendung nach Anspruch 1, **dadurch gekennzeichnet, dass** das Acrylmonomer B die Formel (If) erfüllt, worin R₄ und R₅ einen Wasserstoff bzw. eine Methylgruppe darstellen sowie A und A' unabhängig eine Ethylen-, Propylen- oder Isopropylengruppe darstellen.

3. Verwendung nach Anspruch 2, **dadurch gekennzeichnet, dass** das Acrylmonomer B Ethylenharnstoff-Ethylmethacrylamid der Formel Ig ist:

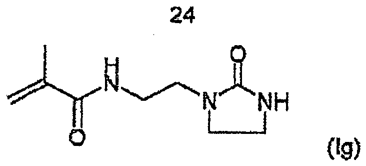

4. Verwendung nach einem der Ansprüche 1 bis 3, **dadurch gekennzeichnet, dass** das Monomer A aus Styrol oder seinen Derivaten, Butadien, Chloropren, den (Meth)acrylestern, den (Meth)acrylsäuren, Maleinsäureanhydrid, den Vinylestern, den Vinylnitrilen und den sulfonierten Monomeren ausgewählt ist.

5. Verwendung nach Anspruch 4, **dadurch gekennzeichnet, dass** das Monomer A Methylmethacrylat, Ethylacrylat, Butylacrylat, 2-Ethylhexylacrylat, Acrylsäure, Methacrylsäure, Vinylacetat, Vinylversatat, Natrium- oder Kalium-1-allyloxy-2-hydroxypropylsulfonat (COPS), Natrium- oder Kalium-Allylsulfonat (MTAS) oder Natrium- oder Kalium-Acrylamidomethylpropansulfonat (AMPS) ist.

6. Verwendung nach einem der Ansprüche 1 bis 5, **dadurch gekennzeichnet, dass** das Monomergemisch umfasst:
a - 60 bis 99 Gew.-% des Gesamtgewichts des Gemischs wenigstens eines Monomers A, das aus Styrol oder seinen Derivaten, Butadien, Chloropren, den (Meth)acrylestern, den (Meth)acrylsäuren, Maleinsäureanhydrid, den Vinylestern, den Vinylnitrilen und den sulfonierten Monomeren ausgewählt ist, und
b - 0,1 bis 40 Gew.-% des Gesamtgewichts des Gemischs wenigstens eines Acrylmonomers B der Formel (If).

7. Verwendung nach Anspruch 6, **dadurch gekennzeichnet, dass** das Acrylmonomer B 0,5 bis 20 Gew.-% des Gesamtgewichts des Monomergemischs, vorzugsweise 1 bis 10 % ausmacht.

8. Verwendung nach einem der Ansprüche 1 bis 7, **dadurch gekennzeichnet, dass** der Latex eine minimale Filmbildungstemperatur (MFT) im Bereich zwischen 0 °C und 80 °C, vorzugsweise zwischen 0 °C und 40 °C sowie eine Glasübergangstemperatur im Bereich zwischen -20 °C und 90 °C, vorzugsweise zwischen 10 °C und 50 °C aufweist.

9. Verwendung nach einem der Ansprüche 1 bis 8, **dadurch gekennzeichnet, dass** das Holz ein Rohholz ist, das aus Buche, Kiefer, Sipo, Eiche, Para Para, Meranti, Curupixa, Eukalyptus oder Tauari ausgewählt ist.

10. Verwendung nach einem der Ansprüche 1 bis 9, **dadurch gekennzeichnet, dass** die Zusammensetzung ferner einen Weichmacher, ein Silan und ein UV-Schutzmittel in den folgenden Masseverhältnissen umfasst:
| | |
|---|---|
| Latex | 89 bis 100 % |
| Weichmacher | 0 bis 5 % |
| Silan | 0 bis 1 % |
| UV-Schutzmittel | 0 bis 5 %. |

11. Verwendung nach Anspruch 10, **dadurch gekennzeichnet, dass** das Silan □-Glycidoxypropyltrimethoxysilan ist.
